# EUROPÄISCHE PATENTANMELDUNG

(11) **EP 1 170 490 A2**
(43) Veröffentlichungstag der Anmeldung: **09.01.2002**
(21) Anmeldenummer: 01116276.5
(22) Anmeldetag: 05.07.2001
(51) Int. Cl.: F02D 23/02, F02D 33/02

(54) **Verbrennungsmotor**

(30) Priorität: 07.07.2000 AT 116300
(71) Anmelder: Jenbacher Aktiengesellschaft, 6200 Jenbach/Tirol (AT)
(72) Erfinder: Fahringer, Albert, 6345 Kössen (AT); Lutz, Bernd, 6600 Pflach (AT); Skorjanz, Peter, 3511 Paudorf (AT)
(74) Vertreter: Hofinger, Engelbert, Dr.Dr.

(57) **Zusammenfassung**

Verbrennungsmotor, insbesondere stationärer Gasmotor, mit einem im Ansaugtrakt angeordnetem Verdichter, insbesondere Abgasturbolader, mit einem dem Verdichter nachgeschalteten elektrisch ansteuerbaren Abblasventil und mit einem Druckaufnehmer zum Erfassen des Druck-lstwertes des Gemisches im Bereich des Abblasventils. Erfindungsgemäß ist vorgesehen:
- eine Einrichtung (9) zum Erfassen der Motorleistung (N),
- eine Einrichtung (10) zum Errechnen eines Druck-Sollwertes in Abhängigkeit von der erfaßten Motorleistung und von einem in einem Speicher vorab gespeicherten Zusammenhang zwischen Motorleistung (N) und Druck-Sollwert (Pₛₒₗₗ) und
- eine Regeleinrichtung (11) zum Regeln des Abblasventils (7), bis der Druck-lstwert (Pᵢₛₜ) den errechneten Druck-Sollwert (Pₛₒₗₗ) erreicht.

## Beschreibung

Die Erfindung betrifft einen Verbrennungsmotor, insbesondere stationärer Gasmotor, mit einem im Ansaugtrakt angeordnetem Verdichter, insbesondere Abgasturbolader, mit einem dem Verdichter nachgeschalteten elektrisch ansteuerbaren Abblasventil und mit einem Druckaufnehmer zum Erfassen des Druck-Istwertes des Gemisches im Bereich des Abblasventils.

Um bei Motoren, insbesondere Gasmotoren, das Lastabschaltverhalten zu verbessern, ist es bereits bekannt, dem Verdichter ein Abblasventil nachzuschalten, um bei Entlastungen ohne Turboladerpumpen den Ladedruck abbauen zu können. Turboladerpumpen entsteht immer dann, wenn der Verdichter in einem Arbeitspunkt mit viel Durchsatz auf der Ausgangsseite "gedrosselt" wird. Dieser Vorgang - einmal in Gang gesetzt - ist vollkommen unkontrollierbar und führt meist zum "Gesamtverlust" des Ladedruckes mit nachfolgender Abstellung des Motors. Um bei einer Lastabschaltung ein übermäßiges Anwachsen der Motordrehzahl zu verhindern, muß jedoch "gedrosselt" werden. Durch die Abblasregelung öffnet man deshalb quasi zum selben Zeitpunkt ein Ventil nach dem Turbolader und gibt ihm damit die Möglichkeit, den Durchsatz kontrolliert abbauen zu können (trotz dem Schließen der Drosselklappe).

Die US 5,526,645 zeigt ein Luftüberdruckregelsystem für einen Diesel-Gas-Verbrennungsmotor oder für einen funkengezündeten Gasverbrennungsmotor, bei welchem ein Luftablaßventil in einer Bypassleitung angeordnet ist, wobei mit der Bypassleitung Luft um einen Turbolader herumgeführt bzw. Luft durch Bypassleitung und Turbolader umgeblasen wird. Ziel dieser Anordnung ist es, den Luftdruck hinter dem Turbolader in Abhängigkeit verschiedener gemessener Motorzustandsparamter zu regeln. Dieses Konzept kann für gattungsgemäße Verbrennungsmotoren, welche vornehmlich über eine Drosselklappe geregelt werden, nicht zur Verbesserung des Lastabschaltverhaltens verwendet werden, da unter anderem das Umblasen von Luft-Gas-Gemisch durch einen Turbolader und eine Bypassleitung das Mischungsverhältnis des Luft-Gas-Gemisches negativ beeinträchtigen würde und daher nicht praktizierbar ist.

Aufgabe der Erfindung ist es, einen Verbrennungsmotor der eingangs genannten Gattung für eine zuverlässige Regelung für das Abblasventil, insbesondere zum Vermeiden des Turboladerpumpens, bereitzustellen.

Der erfindungsgemäße Verbrennungsmotor ist gekennzeichnet durch:
- eine Einrichtung zum Erfassen der Motorleistung,
- eine Einrichtung zum Errechnen eines Druck-Sollwertes in Abhängigkeit von der erfaßten Motorleistung und von einem in einem Speicher vorab gespeicherten Zusammenhang zwischen Motorleistung und Druck-Sollwert, und
- eine Regeleinrichtung zum Regeln des Abblasventils, bis der Druck-Istwert den errechneten Druck-Sollwert erreicht.

Die Erfindung geht davon aus, daß bei einem bestimmten Verbrennungsgas-Luft-Verhältnis des Gemisches (und bei einer bestimmten Temperatur) ein vorgegebener Zusammenhang zwischen der Motorleistung und dem Gemischdruck im Ansaugtrakt herrscht. Dieser Zusammenhang wird erfindungsgemäß ausgenutzt, um eine druckgeführte Regelung für das Abblasventil zu schaffen. Der Zusammenhang zwischen der Motorleistung und dem Druck-Sollwert kann entweder empirisch oder aus Messungen ermittelt werden. Er kann dann beispielsweise als Formel mit bestimmten Parametern oder als Zuordnungstabelle abgespeichert werden. Jedenfalls ist diese Einrichtung in der Lage, aus der tatsächlich gemessenen Motorleistung und einem korrektiv eingehenden Temperaturwert einen Druck-Sollwert zu erzielen.

Das Abblasventil wird nun geregelt, bis der Druck-Istwert den Druck-Sollwert erreicht. Im allgemeinen wird man diesen Druck-Sollwert oberhalb dessen das Abblasventil öffnet, um einen geringen Betrag (beispielsweise 0,2 bis 0,3 bar) höher ansetzen als dies dem empirischen und gemessenen Zusammenhang zwischen den involvierten Größen bei einem Motor ohne Abblasventil entspricht. Man hält also günstigerweise mit dem Abblasventil einen Sicherheitsabstand im Hinblick auf die eingeregelte Druckstelle, sodaß eine übliche Motorregelung, welche auf die Drosselklappe wirkt, noch einen ausreichenden effektiven Einflußbereich hat. Bei vollständig geöffneter Drosselklappe kann also die Motordrehzahl noch nicht abgefangen werden, wenngleich ein Großteil der "Überleistung" über das Abblasventil abgeführt wird. Der eigentliche Abbau der Überdrehzahl muß dann über die erwähnte Drosselklappensteuerung erfolgen. Allerdings muß die Drosselklappe nun wegen des klein gehaltenen Druckes nicht sehr weit schließen, um die Motorleistung unter die gegebene Last absenken zu können.

Bricht der Druck nach dem Verdichter unter den Sollwert ein, so wird das Abblasventil geschlossen, was bewirkt, daß wieder möglichst viel Massenstrom zum Motor und auch zur Turbine gelangt. Dadurch kann die Motorleistung wie auch die Turboladerdrehzahl auf einem hinreichend hohen Niveau gehalten werden, sodaß die Motordrehzahl nicht zu stark fällt.

Für Abschaltungen in den Bereich niedriger Leistungen wird ein Mindestsollwert für den Druck vorgegeben, sodaß das Ventil nicht bei Überdrehzahl und bereits niedrigem Druck ständig geöffnet bleibt. Aufgrund des Regelverfahrens tritt bei hinreichend großem Abblasventilquerschnitt und hinreichend schneller Öffnung des Ventils kein Verdichterpumpen auf, da das Abblasventil in den Bereichen, in denen die Drosselklappe aufgrund von Überdrehzahl weit schließen kann und in denen somit Pumpgefahr vorherrscht, den Ladedruck auf niedrigem Niveau hält.

Bevorzugt ist dazu also vorgesehen, daß weiters eine Einrichtung zum Erfassen der Drehzahl des Motors vorgesehen ist, wobei eine Vergleichseinrichtung das Abblasventil unabhängig vom Signal aus der Regeleinrichtung schließt, wenn die Drehzahl unter einem vorgebbaren Sollwert liegt bzw. fällt. Die erfindungsgemäße Regelung bleibt eine druckgeführte Regelung. Das Drehzahlsignal wird unabhängig von dieser druckgeführten Regelung dazu verwendet, um das Abblasventil zu schließen, wenn die Drehzahl unter einen Sollwert fällt.

Weitere Vorteile und Einzelheiten der Erfindung werden anhand der nachfolgenden Figurenbeschreibung näher erläutert.

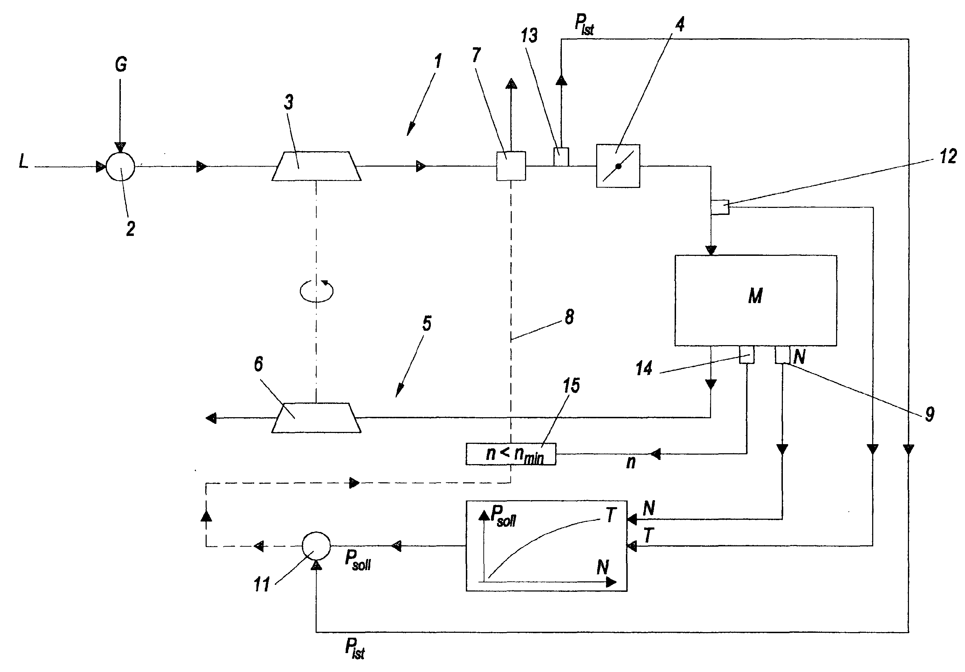

Die Figur zeigt einen erfindungsgemäßen Verbrennungsmotor anhand eines Ausführungsbeispiels.

Der erfindungsgemäße Verbrennungsmotor M, insbesondere ein mehrzylindriger Gasmotor, weist in seinem Ansaugtrakt 1 einen Luft-Gas-Mischer 2 auf. Das Gemisch wird über den Turbolader verdichtet und gelangt über die Drosselklappe 4 zu den Einlaßventilen des Verbrennungsmotors M. Ein allfälliger Gemischkühler ist hier nicht dargestellt.

Im Abgastrakt 5 des Motors M ist die Turbine 6 des Turboladers in an sich bekannter Weise angeordnet.

Im Ansaugtrakt 1 des Verbrennungsmotors M befindet sich ein elektrisch ansteuerbares Abblasventil 7, dessen Regelung Gegenstand der vorliegenden Erfindung ist. Das Abblasventil ist über eine Steuerleitung 8 in seinem Öffnungs- bzw. Schließgrad ansteuerbar.

Erfindungsgemäß ist nun vorgesehen:
- eine Einrichtung 9 zum Erfassen der Motorleistung N,
- eine Einrichtung 10 zum Errechnen eines Druck-Sollwertes Pₛₒₗₗ in Abhängigkeit von der erfaßten Motorleistung N und von einem im Speicher vorab gespeicherten Zusammenhang zwischen Motorleistung N und Druck-Sollwert Pₛₒₗₗ, und
- eine Regeleinrichtung 11 zum Regeln des Abblasventiles 7, bis der Druck-Istwert Pᵢₛₜ (Sensor 13) den errechneten Druck-Sollwert erreicht.

Der vorab gespeicherte Zusammenhang zwischen Motorleistung und Druck-Sollwert ist in der Figur schematisch durch eine Kennlinie dargestellt. Diese Kennlinie kann empirisch oder durch Messungen ermittelt werden. Sie kann beispielsweise in Form einer Formel samt gespeicherten Parametern oder als Zuordnungstabelle abgespeichert sein. Als Korrekturwert für den Zusammenhang kann noch die Gemischtemperatur T berücksichtigt werden, die über einen Temperatursensor 12 erfaßt wird.

Die dargestellte Einrichtung arbeitet nun wie folgt: Die momentan erfaßte Motorleistung N und die Gemischtemperatur T werden der Einrichtung 10 zugeführt. Diese ermittelt dann aus einem vorgegebenen Zusammenhang einen Sollwert für den Gemischdruck. Durch Öffnen und Schließen des Abblasventils 7 regelt dann die Regeleinrichtung 11 auf diesen Gemischdruck, wobei über den Drucksensor 13 der Druck-Istwert im Bereich des Abblasventils 7 erfaßt wird.

Es handelt sich also insgesamt um eine druckgeführte Regelung des Abblasventiles.

Gemäß einem besonderen Ausführungsbeispiel der Erfindung ist weiters vorgesehen, daß über eine Einrichtung 14 die Drehzahl n des Motors erfaßt wird. Eine Vergleichseinrichtung 15 erfaßt diese Motorleistung N und schließt in jedem Fall das Abblasventil 7, wenn die Ist-Drehzahl unter die vorgegebene Soll-Drehzahl n_{MIN} fällt. Dies geschieht auch dann, wenn die druckgeführte Regelung über die Regeleinrichtung 11 das Abblasventil öffnen würde.

## Patentansprüche

1. Verbrennungsmotor, insbesondere stationärer Gasmotor, mit einem im Ansaugtrakt angeordnetem Verdichter, insbesondere Abgasturbolader, mit einem dem Verdichter nachgeschalteten elektrisch ansteuerbaren Abblasventil und mit einem Druckaufnehmer zum Erfassen des Druck-Istwertes des Gemisches im Bereich des Abblasventils, **gekennzeichnet durch**
- eine Einrichtung (9) zum Erfassen der Motorleistung (N),
- eine Einrichtung (10) zum Errechnen eines Druck-Sollwertes in Abhängigkeit von der erfaßten Motorleistung und von einem in einem Speicher vorab gespeicherten Zusammenhang zwischen Motorleistung (N) und Druck-Sollwert (Pₛₒₗₗ), und
- eine Regeleinrichtung (11) zum Regeln des Abblasventils (7), bis der Druck-Istwert (Pᵢₛₜ) den errechneten Druck-Sollwert (Pₛₒₗₗ) erreicht.

2. Verbrennungsmotor nach Anspruch 1, **dadurch gekennzeichnet, daß** weiters ein Temperatursensor (12) zum Erfassen der Gemischtemperatur (T) vor den Einlaßventilen vorgesehen ist, wobei die Einrichtung (10) zum Errechnen des Druck-Sollwertes neben der Motorleistung (N) auch die erfaßte Gemischtemperatur (T) gemäß einem vorab gespeicherten Zusammenhang berücksichtigt.

3. Verbrennungsmotor nach Anspruch 1 oder 2, **dadurch gekennzeichnet, daß** das Abblasventil (7) zwischen dem Verdichter (3) und einer Drosselklappe (4) im Ansaugtrakt (1) angeordnet ist.

4. Verbrennungsmotor nach einem der Ansprüche 1 bis 3, **dadurch gekennzeichnet, daß** weiters eine Einrichtung (14) zum Erfassen der Drehzahl (n) des Motors (M) vorgesehen ist, wobei eine Vergleichseinrichtung (15) das Abblasventil (7) unabhängig vom Signal aus der Regeleinrichtung (11) schließt, wenn die Drehzahl (n) unter einem vorgebbaren Sollwert (n_{MIN}) liegt bzw. fällt.
